(19) Europäisches Patentamt
European Patent Office
Office européen des brevets

(11) **EP 3 364 227 A1**

(12) **EUROPEAN PATENT APPLICATION**
published in accordance with Art. 153(4) EPC

(43) Date of publication:
**22.08.2018 Bulletin 2018/34**

(51) Int Cl.:
***G02B 26/08*** *(2006.01)*    ***G02B 26/10*** *(2006.01)*

(21) Application number: **16855196.8**

(86) International application number:
**PCT/JP2016/076149**

(22) Date of filing: **06.09.2016**

(87) International publication number:
**WO 2017/064942 (20.04.2017 Gazette 2017/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **13.10.2015 JP 2015202408**

(71) Applicant: **The University Of Tokyo
Tokyo 113-8654 (JP)**

(72) Inventors:
• **ISHIKAWA, Masatoshi**
**Tokyo 113-8654 (JP)**
• **WANG, Lihui**
**Tokyo 113-8654 (JP)**
• **HAYAKAWA, Tomohiko**
**Tokyo 113-8654 (JP)**

(74) Representative: **Piotrowicz, Pawel Jan Andrzej
Venner Shipley LLP
Byron House
Cambridge Business Park
Cowley Road
Cambridge CB4 0WZ (GB)**

(54) **LIGHT BEAM POSITION CONTROL DEVICE**

(57)    The present invention relates to technology for controlling position of a light beam using a dielectric elastomer itself as an optical element. By controlling position of a light beam, it is possible to maintain high resolution, even in as case where an object is at a distance. The main body 10 is constituted by a dielectric elastomer. This dielectric elastomer is made substantially transparent to a light beam that is an object of control. The dielectric elastomer is made to have a refractive index that is different to refractive index of a medium that exists around the main body 10, and that the light beam will pass through. The feed section 20 is configured to cause change in the thickness of the main body 10 by applying voltage to the main body 10.

FIG. 1

**Description**

Technical Field

The present invention relates to technology for controlling position of a light beam.

Background Art

Conventionally, technology for controlling position and direction of camera line of sight or a laser beam (hereafter both will be referred to as "light beam") has been known. In order to control position and direction of a light beam with high precision, resolution of a device is an important element.
Here, in order to carry out control at high resolution using a mechanical mechanism it is necessary to have high machining accuracy of the device itself. For example, in a case where gears are used, there is a demand to reduce tooth size to increase resolution.
However, not only does mechanical machining precision have limits, gears produce errors due to characteristic backlash, and as a result resolution of a light beam control device using a mechanical system is limited.
Technology to control angle of the light beam using change in refractive index of an electro-optical element, by controlling voltage that is applied to the electro-optical element is also known (refer to patent publication 1 below).
However, this technology controls angle (direction) of a light beam that passes through the electro-optical element, and so if the distance between the electro-optical element and an object the light beam is directed at becomes large, there is a tendency for resolution to deteriorate. With this technology, therefore, there is a problem that maintaining stable resolution is difficult.
Technology that uses a dielectric elastomer as an actuator that is controlled by voltage has also been proposed (patent publication 2 and non-patent publication 1 below). With this technology it is possible to control a light beam by driving an optical element using a dielectric elastomer. However, with this technology there is a problem in that it is necessary to individually prepare the dielectric elastomer and the optical element.

Citation list

Patent literature

    Patent Publication 1: Japanese patent laid-open number 2010-224003 (paragraph 0030 of the specification)
    Patent Publication 2: Japanese patent laid-open number 2006-50856

Non-patent literature

Non-patent publication 1: M. Bozlar, et al, "Dielectric elastomer actuators with elastomeric electrodes," Applied Physics Letters, 101.9 (2012)

SUMMARY OF THE INVENTION

Problems to be solved by the invention

The present invention has been conceived in view of the above-described circumstances. One main objective of the present invention is to provide technology to control position of a light beam using a dielectric elastomer itself as an optical element. Another objective of the present invention is to provide technology that is capable of maintaining high resolution, even when an object is at a distance, by controlling position of a light beam.

Means Of Solving The Problems

Means for solving the above described problem can be described as in the following aspects.

(Aspect 1)

A light beam position control device comprising: a main body and a power feed section, wherein the main body is constituted by an dielectric elastomer, the dielectric elastomer is made substantially transparent to a light beam that is an object of control, the dielectric elastomer is made to have a refractive index that is different to refractive index of a medium that exists around the main body, and that the light beam will pass through, and the power feed section is configured to cause thickness of the main body to change by applying a voltage to the body.

(Aspect 2)

The light beam position control device of aspect 1, wherein the power feed section comprises a power supply and an electrode, with the electrode being attached to a surface of the main body, and the power supply being configured to apply a voltage to the main body by means of the electrode.

(Aspect 3)

The light beam position control device of aspect 2, wherein the electrode is arranged around positions where the light beam passes through, and in this way the light beam is capable of passing through the main body without passing through the electrode.

(Aspect 4)

The light beam position control device of aspect 2 or aspect 3, wherein the power supply is configured to apply a voltage to the main body, at a plurality of positions on the electrode.

(Aspect 5)

The light beam position control device of any one of aspects 1 to 4, further comprising a light beam coarse adjustment section, the light beam coarse adjustment section being configured to change position or direction of the light beam before the light beam is incident on the main body or after the light beam has passed through the main body.

(Aspect 6)

The light beam position control device of any one of aspects 1 to 5, wherein the power feed section further comprises a storage section, the storage section storing correspondence information of a voltage value applied to the main body and amount of deformation of the main body, and the power feed section being configured to perform power feed from the power supply to the main body by specifying voltage value for an intended amount of deformation, based on the correspondence information.

(Aspect 7)

The light beam position control device of any one of aspects 1 to 6, further comprising a second main body and a second power feed section, wherein the second main body is constituted by a dielectric elastomer, the dielectric elastomer of the second main body is made substantially transparent to a light beam that has passed through the first main body, the dielectric elastomer of the second main body is made to have a refractive index that is different to refractive index of a medium that exists around the second main body, and that the light beam will pass through, and the second power feed section is configured to cause thickness of the second main body to change by applying a voltage to the second main body.

(Aspect 8)

A light beam position control method that uses a light beam position control device comprising a main body and a power feed section, wherein the main body is constituted by an dielectric elastomer, the dielectric elastomer is made substantially transparent to a light beam that is an object of control, the dielectric elastomer is made to have a refractive index that is different to refractive index of a medium that exists around the main body, and that the light beam will pass through, and the power feed section is configured to cause thickness of the main body to change by applying a voltage to the main body, the light beam position control method comprising: a step of applying voltage from the power feed section to the main body, and a step of causing the light beam to pass through the main body, that has been deformed by application of the voltage, so as to change emission position of the light beam from the main body, before and after the deformation.

3

Effect Of The Invention

According to the present invention, it is possible to control light beam position using a dielectric elastomer itself as an optical element, without being dependent on a mechanical mechanism. Also, according to the present invention, it is possible to maintain high resolution, even in as case where an object is at a distance, by controlling position of a light beam. Brief Description Of The Drawings

Fig. 1 is an explanatory drawing for describing the schematic structure of a light beam position control device of a first embodiment of the present invention.

Fig. 2 is an explanatory drawing for describing direction of a light beam in the device of Fig. 1.

Fig. 3 is an explanatory drawing for describing position change of a light beam in a case where voltage has been applied.

Fig. 4 is an explanatory drawing in a plan view of a main body used in a light beam position control device of a second embodiment of the present invention.

Fig. 5 is a schematic cross sectional drawing of Fig. 4.

Fig. 6 is an explanatory drawing of a light beam coarse adjustment section used in a light beam position control device of a third embodiment of the present invention.

Fig. 7 is an explanatory drawing of a light beam coarse adjustment section used in a light beam position control device of a fourth embodiment of the present invention.

Fig. 8 is a plan view for describing an arrangement state of a plurality of main bodies used in a light beam position control device of a fifth embodiment of the present invention.

Fig. 9 is an explanatory drawing of the device of Fig. 8 looking from the front.

Fig. 10 is a plan view for describing a layered arrangement state of a plurality of main bodies used in a light beam position control device of a sixth embodiment of the present invention.

Fig. 11 is an explanatory drawing of the device of Fig. 10 looking from the front.

Fig. 12 is an explanatory drawing showing a plan view of a main body used in a light beam position control device of a seventh embodiment of the present invention.

Fig. 13 is a schematic cross sectional drawing taken along line A-A in Fig. 12.

Fig. 14 is a schematic cross sectional drawing taken along line B-B in Fig. 12.

Fig. 15 is an explanatory drawing showing a plan view of a main body used in a light beam position control device of an eighth embodiment of the present invention.

Fig. 16 is a schematic cross sectional drawing taken along line C-C in Fig. 15.

Fig. 17 is a graph showing a relationship between applied voltage (kV) and light beam position change amount ($\mu$m), in a case where the device of the first embodiment is used.

Description of the Embodiments

(First Embodiment)

A light beam position control device of a first embodiment of the present invention will be described in the following with reference to the attached drawings.

(Structure of first embodiment)

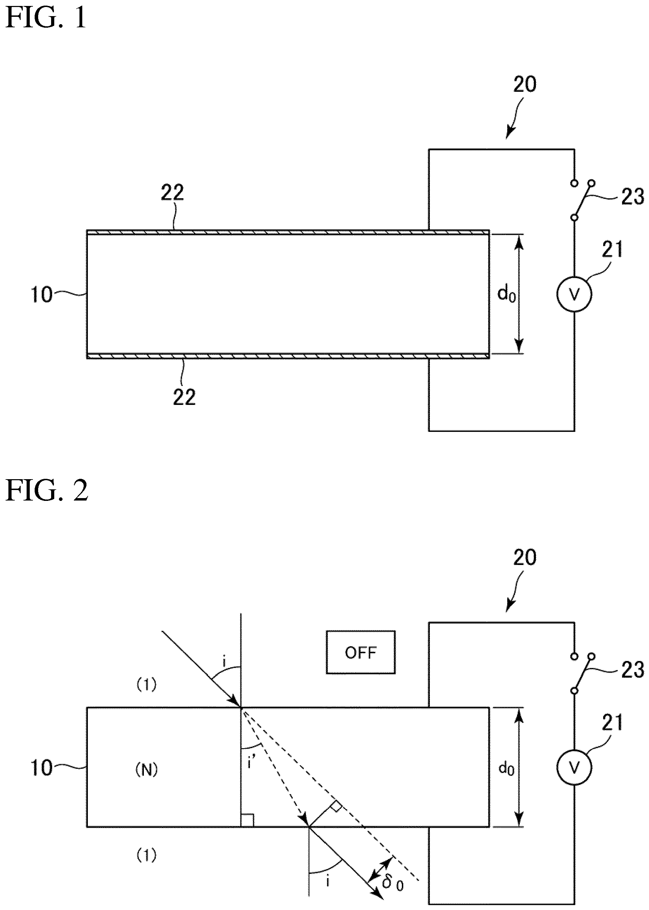

The light beam position control device of this embodiment comprises a main body 10 and a power feed section 20 (refer to Fig. 1). It should be noted that although Fig. 1 shows a cross-section of the main body 10, in this drawing dimensions are shown in an exaggerated fashion to simplify understanding, and proportions are not accurate.

(Main Body)

The main body 10 is constituted by a dielectric elastomer. This dielectric elastomer is made substantially transparent to a light beam that is an object of control.

The dielectric elastomer is made to have a refractive index that is different to refractive index of a medium that exists around the main body 10, and that the light beam will pass through. With the example of Fig. 1, around the main body 10 is air.

VHB4910 (refractive index 1.47) manufactured by 3M Ltd. can be used as the dielectric elastomer capable of being used with this embodiment, but this is not limiting.

With this embodiment, shape of the main body 10 (namely the shape of the dielectric elastomer) is a made a thin belt shape extending in one direction (specifically, a direction perpendicular to the paper surface of Fig. 1), but is not particularly limited to this shape. In other words, it may be a shape with which light beam position control can be executed.

(Power Feed Section)

The feed section 20 is configured to cause change in the thickness of the main body 10 by applying voltage to the main body 10.

More specifically, the feed section 20 of this embodiment comprises a power supply 21, electrodes 22, and a switch 23.

The electrodes 22 are respectively attached the surfaces (upper and lower surfaces in Fig. 1) of the main body 10. It is desirable for the electrodes 22 to be of a material that is transparent to wavelength of items used. It is possible to use transparent conductive gel, for example, as the material of the electrodes 22, but this is not limiting. As a transparent conductive gel, "Technogel G-CR manufactured by Sekisui Plastics Co. Ltd." can be exemplified, but this is not limiting.

The power supply 21 is configured to apply voltage to the main body 10 via the switch 23 and electrodes 22. A constant voltage dc power supply can be used as the power supply 21 in this embodiment. More specifically, as the power supply 21 it is possible to use a power supply device that can be voltage controlled with 16 bits in a range of about 1 to 10 kV, for example, by a suitable computer (for example, a suitable DA board), but this is only an example and the present invention is not limited to this. The most important thing is that the power supply 21 can supply a given voltage value at the required resolution.

The switch 23 is for switching supply of power from the power supply 21 to the main body 10 on and off. It should be noted that Fig. 1 shows the switch 23 in an off state. A mechanical switch or an electronic switch (for example, a transistor or thyristor), for example, can be used as the switch 23, but this is not limiting. The main requirement for the switch 23 of this embodiment is that it has a function of switching supply of power from the power supply 21 on and off.

(Operation of this Embodiment)

Next, a light beam position control method that uses the device of this embodiment described above will be described.

(Optical Principle)

First, assumed optical principles will be described with reference to Fig. 2. It should be noted that in Fig. 2, the electrodes 22 have been omitted to avoid complicated description. Light beam position is changed by refractive index of the electrodes 22 also, but from here onwards it will assumed that the electrodes 22 are extremely thin and description will ignore error due to the electrodes 22. However, if amount of variation in light beam position due to the electrodes 22 is known (or if it can be obtained experimentally in advance), it is possible to control light beam position taking the effect of the electrodes 22 into account.

When a light beam that is incident on an object at a given angle of inclination i passes through that object, a displacement $\delta$ between optical axis of the incoming beam and optical axis of the outgoing beam is represented by the following equation.

$$\delta = \left(1 - \frac{1}{N}\frac{\cos i}{\cos i'}\right)d\sin i \qquad (1)$$

Here,

i: incoming beam angle
i' refraction beam angle
N: refractive index of object (main body)
d: thickness of object (main body).

Also, it is noted that displacement $\delta$ is a function of thickness d. It should also be noted here that air is assumed as a medium around the main body, and refractive index of air is 1. Also, a range taken by angle of inclination i is assumed to be $0 < i < \pi/2$(rad) with this embodiment.

(Properties of the Dielectric Elastomer)

Next, a relationship between thickness of the dielectric elastomer and applied voltage will be described.

Electromechanical pressure $P_{ep}$ of the dielectric elastomer, when a voltage U has been applied to the dielectric elastomer, is represented by the following equation.

$$p_{eq} = \varepsilon_0 \varepsilon_r \frac{U^2}{d^2} \qquad (2)$$

Here,

$\varepsilon_0$: dielectric constant of a vacuum,

$\varepsilon_r$: dielectric constant of the dielectric elastomer, and

U: applied voltage. If it is assumed that $P_{eq}$ is constant, then there is a relationship such that as voltage U increases thickness d decreases.

It should be noted that since the dielectric elastomer is deformable with voltage application, change in the refractive index of the dielectric elastomer can be substantially ignored.

(Light Beam Position Control)

A light beam position control method of this embodiment will be described on the premise of the above description.

First, in an initial state, it is assumed that voltage is off (refer to Fig. 2). At this time, light beam displacement amount represented by equation (1) above is made $\delta_0$. Also, thickness of the main body 10 at this time is made $d_0$.

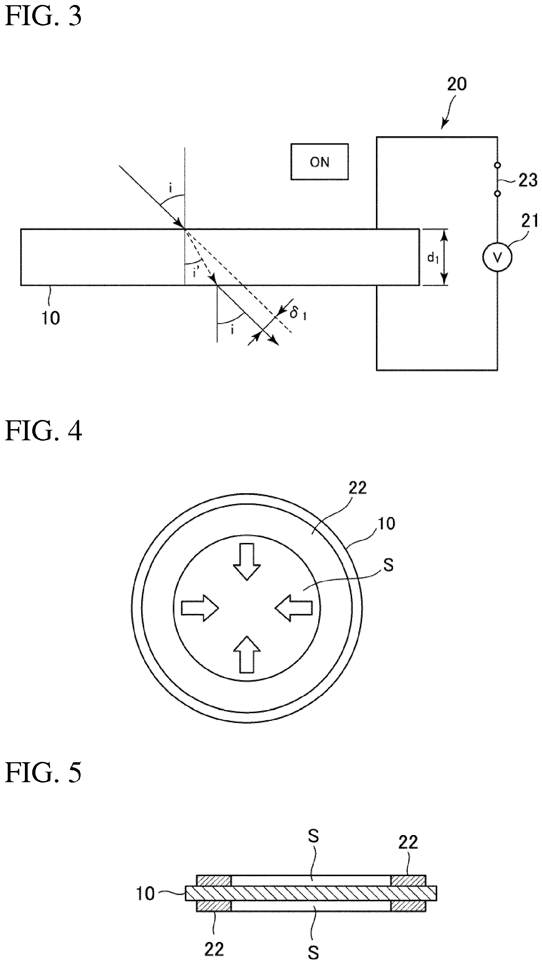

Next, using the power supply 21, voltage is applied to the main body 10 by means of the electrodes 22 (refer to Fig. 1). If this is done thickness of the main body 10 is changed to $d_1$, as shown by previously described equation (2) (refer to Fig. 3).

If this happens then displacement amount of the light beam is changed from $\delta_0$ to $\delta_1$, accompanying change in thickness d of the main body 10 (refer to Fig. 3). It should be noted that if it is assumed that the refractive index of the material is equal at the incident side and the emission side, emission angle of the light beam in Fig. 3 can be considered to be substantially the same as the emission angle of the light beam in Fig. 2.

Accordingly, with the device of this embodiment, it becomes possible to control only position of a light beam without changing the direction of the light beam. With technology that changes angle of a light beam, there is a problem that in a case where distance to an object (or camera) is far, resolution of the light beam position is deteriorated. Conversely, with this embodiment the position of the light beam is changed, and so there is the advantage that it becomes possible to control light beam position at a high resolution regardless of distance.

Also, with this embodiment there is the advantage that since it is possible to control position of a light beam in accordance with applied voltage value, without a mechanical mechanism, high precision light beam position control becomes possible.

Further, with the device of this embodiment it as possible to control a voltage value supplied to the main body 10 with high resolution, by using digital control with a computer, for example. Accordingly, if a relationship between voltage value and amount of deformation of the main body 10 is known, there is the advantage that it is possible to control the light beam position with high resolution.

It should be noted that with this embodiment, a relationship between voltage value and change amount in the light beam position $|\delta_0-\delta_1|$ is preferably obtained experimentally in advance, and a correspondence relationship between the two stored in a storage section (not shown). In this way, light beam position control with good precision becomes possible even if the relationship between voltage value and light beam position change amount is nonlinear. Also, even if the effect on light beam position due to the electrodes 22 cannot be ignored, light beam position control so as to suppress or cancel the effect of the electrodes 22 becomes simple.

(Second embodiment)

Next, a light beam position control device of a second embodiment of the present invention will be described based on Fig. 4 and Fig. 5. In the description of this second embodiment, structural elements that are basically common to the device of the first embodiment described above will be assigned the same reference numerals, and redundant description be avoided.

With the device of the first embodiment described above, part of the electrodes 22 of the feed section 20 was configured to pass the light beam. Conversely, the electrodes 22 of the device of the second embodiment are arranged on both front and rear surfaces of the main body 10, around a position that a light beam passes through, and in this way it is made possible for the light beam to be pass through the main body 10 without passing through the electrodes 22.

In more detail, the electrodes 22 of the second embodiment are formed ring-shaped in a planar view, and a space S is formed inside each of the electrodes 22 (refer to Fig. 5). In the device of the second embodiment, a light beam is incident at a front surface side of the main body 10 at a portion where the space S is, and can exit from the space S at the rear surface side of the main body 10.

With the device of the second embodiment also, it is possible to control light beam position by deforming the main body 10 by applying a voltage to the main body 10 by means of the electrodes 22.

Here, with the device of the second embodiment, since it is not necessary for the light beam to pass through the electrodes 22 there is the advantage that it becomes possible to keep attenuation of the light beam by the electrodes 22 low.

Also, the electrodes 22 generally have a different refractive index to that of air and the main body 10, but since they are thin, amount of offset (error) in light beam position due to the electrodes 22 is minute. However, by having a configuration such that the light beam does not pass through the electrodes 22, there is the advantage that it is possible to improve precision of light beam position.

Further, at a contact portion between the electrodes 22 and the main body 10 it is easier for bubbles and deformation to occur, and if the light beam passes through this type of portion it will become a cause of errors in the light beam position. By configuring such that the light beam does not pass through the electrodes 22, there is the advantage that it is possible to avoid this type of error generation.

Other structures and advantages of this embodiment are basically the same as those of the previous described first embodiment, and so more detailed description has been omitted.

(Third Embodiment)

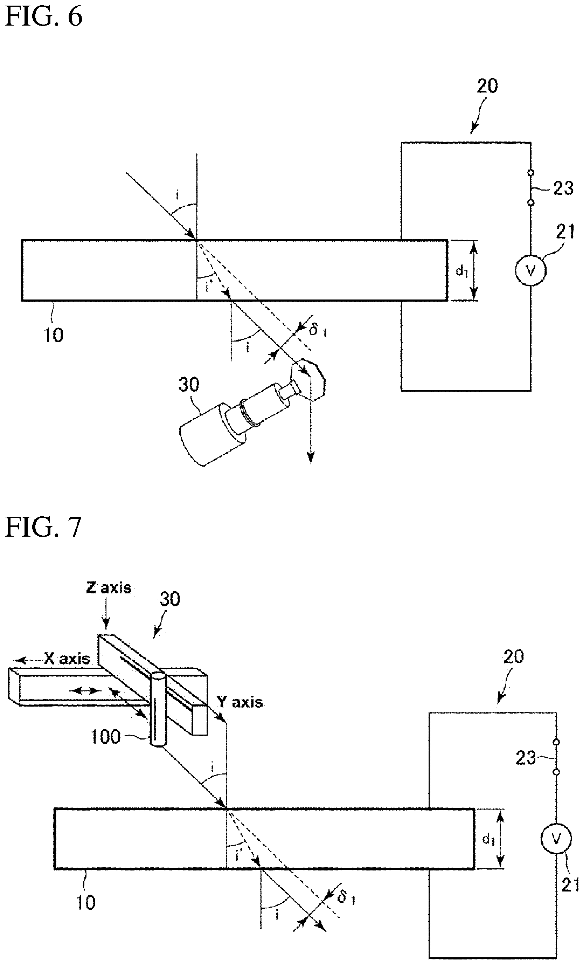

Next, a light beam position control device of a third embodiment of the present invention will be described based on Fig. 6. In the description of this third embodiment, structural elements that are basically common to the device of the first embodiment described above will be assigned the same reference numerals, and redundant description be avoided.

The device of this embodiment further comprises a light beam coarse adjustment section 30. The light beam coarse adjustment section 30 is configured to cause the position or direction of the light beam to change after having passed through the main body 10. With this embodiment, a Galvano mirror for which rotation angle can be controlled is used as the light beam coarse adjustment section 30, but instead of this it is also possible to use another device for which light beam direction can be controlled, such as an electro-optical element etc., as the light beam coarse adjustment section.

With the device of the first embodiment, despite the fact that the light beam position can be controlled with good precision, it is difficult to make displacement amount $|\delta_0-\delta_1|$ large. Conversely, with the device of the third embodiment by controlling not only light beam position but further controlling light beam direction there is the advantage that it is possible to easily direct a light beam to the required position.

Other structures and advantages of this embodiment are basically the same as those of the previous described first embodiment, and so more detailed description has been omitted.

(Fourth Embodiment)

Next, a light beam position control device of a fourth embodiment of the present invention will be described based on Fig. 7. In the description of this fourth embodiment, structural elements that are basically common to the device of the third embodiment described above will be assigned the same reference numerals, and redundant description be avoided.

With the third embodiment, a device that controls light beam direction was used as the light beam coarse adjustment section 30, but with the fourth embodiment an XY table (mechanical position control device) for controlling light beam position is used. With this embodiment, therefore, it becomes possible to significantly change position of a light source 100 (or photodetector) in the XY direction using the XY table.

Also, with the fourth embodiment there is a configuration to move light beam position before being incident on the main body 10.

With the device of the fourth embodiment it is possible to move the light beam position significantly, and as a result there is the advantage that it is easy to direct the light beam to the required position.

Other structures and advantages of this embodiment are basically the same as those of the previous described third embodiment, and so more detailed description has been omitted.

(Fifth Embodiment)

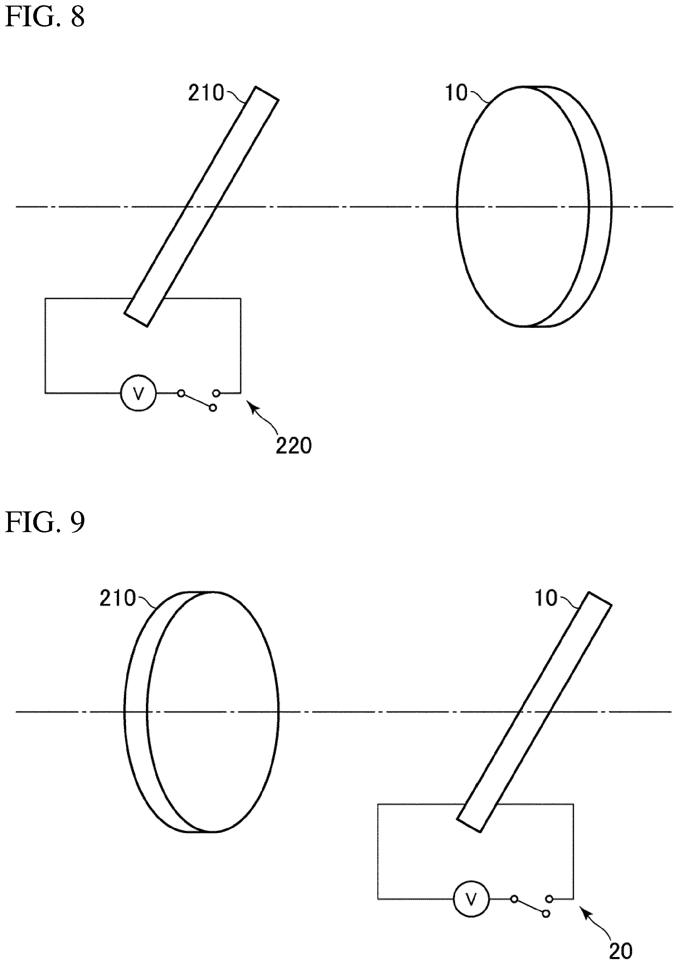

Next, a light beam position control device of a fifth embodiment of the present invention will be described based on Fig. 8 and Fig. 9. In the description of this fifth embodiment, structural elements that are basically common to the device of the first embodiment described above will be assigned the same reference numerals, and redundant description be avoided.

The device of this embodiment further comprises a second main body 210 and a second power feed section 220 (refer to Fig. 8). These second main body 210 and second power feed section 220 are respectively constructed in the same way as the main body 10 and feed section 20 of either of the previously described embodiments (refer to Fig. 9).

Specifically, the second main body 210 of this embodiment is constituted by a dielectric elastomer, and the second power feed section 220 (refer to Fig. 8) is configured to change the thickness of the second main body 210 by applying a voltage to the second main body 210. The second power feed section 220 of this embodiment can control thickness of the second main body 210 by a applying a voltage to the second main body 210 independently of the feed section 20.

The second main body 210 is arranged at a position where it is possible for the light beam, that has passed through the main body 10, to pass through. Also, the second main body 210 is inclined in a different direction to the main body 10. For example, if the main body 10 is inclined so as to rotate about an axis that is parallel to the x-axis, the second main body 210 is inclined so as to rotate about an axis that is parallel to the Y axis. It should be noted that an intersection angle between the X axis and the Y axis here does not have to be orthogonal.

With the device of the fifth embodiment, there is the advantage that position of the light beam can be controlled in a two dimensional direction.

Other structures and advantages of this embodiment are basically the same as those of the previous described first embodiment, and so more detailed description has been omitted.

(Sixth Embodiment)

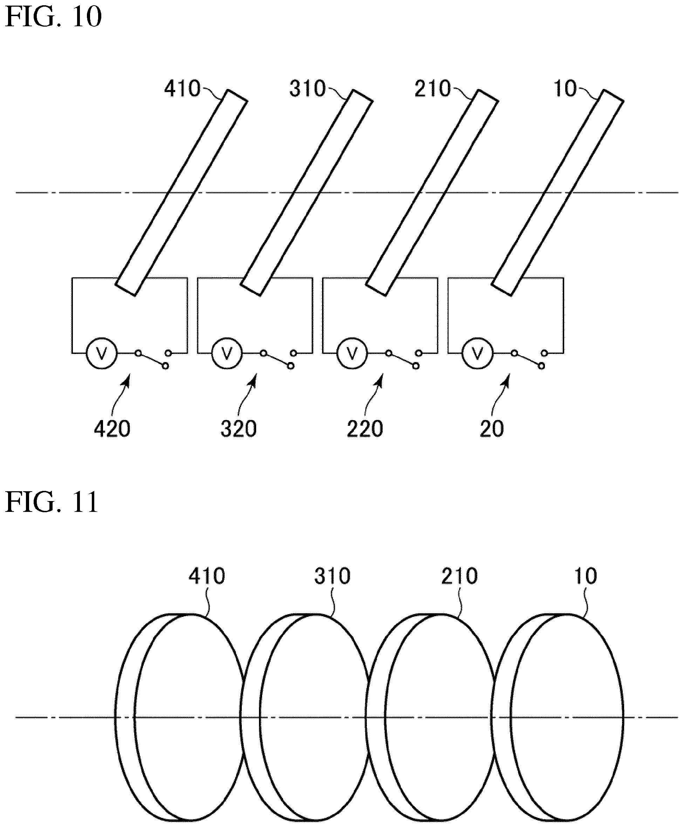

Next, a light beam position control device of a sixth embodiment of the present invention will be described based on Fig. 10 and Fig. 11. In the description of this sixth embodiment, structural elements that are basically common to the device of the first embodiment described above will be assigned the same reference numerals, and redundant description be avoided.

The device of this embodiment further comprises second to fourth main bodies 210-410, and second to fourth power feed sections 220-420 (omitted from Fig. 11). These second to fourth main bodies 210-410 and second to fourth power feed sections 220-420 are respectively constructed in the same way as the main body 10 and feed section 20 of either of the previously described embodiments.

Specifically, the second to fourth main bodies 210-410 of this embodiment are constituted by a dielectric elastomer, and the second to fourth power feed sections 220-420 are configured to change the respective thicknesses of the second to fourth main bodies 210-410 by applying voltages to the second to fourth main bodies 210-410.

According to the device of the sixth embodiment, it is possible to cause a light beam to be sequentially displaced by the first to fourth main bodies 10-410. Accordingly, with this device there is the advantage that light beam displacement amount (controllable range) can be increased.

Other structures and advantages of this embodiment are basically the same as those of the previous described first embodiment, and so more detailed description has been omitted.

(Seventh Embodiment)

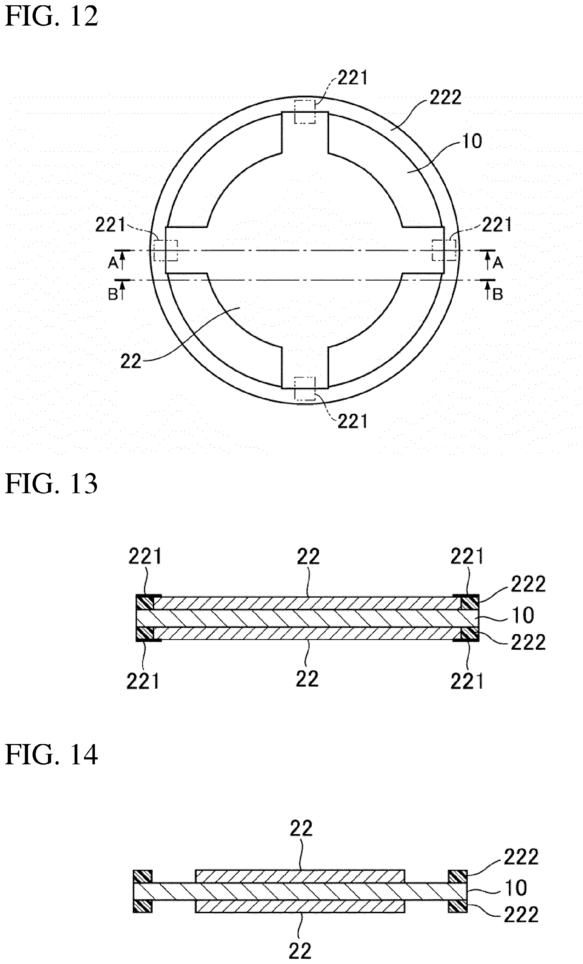

Next, a light beam position control device of a seventh embodiment of the present invention will be described based on Fig. 12 to Fig. 14. In the description of this seventh embodiment, structural elements that are basically common to the device of the first embodiment described above will be assigned the same reference numerals, and redundant description be avoided.

With the device of this embodiment, conductive tape 221 is attached at a plurality of locations (four locations with the illustrated example) of the electrodes 22 (referred to Fig. 12 and Fig. 13), and power is fed in parallel (that is, at the same potential) from the power supply 21 to these conductive tapes 221. Here, attachment positions for the conductive tape 221 are shown schematically using two-dot chain lines in Fig. 12. It should be noted that in Fig. 13 and Fig. 14, thickness of the electrodes 22 is shown in an exaggerated manner. Also, in these drawings reference numeral 222 is a frame for supporting the main body 10, and this frame is constructed from a non-conductive material such as plastic, for example. The electrodes 22 of this embodiment extend in directions that are offset from each other by about 90°, that is in the 12 o'clock, 3 o'clock, 6 o'clock, and 9 o'clock directions if looked at in plan view.

In a case where there is a certain amount of resistance in the electrodes 22, if power is supplied from only one location on the electrodes 22 slight deviation occurs in a voltage across opposing electrodes. If this happens amount of deformation of the main body 10 will be non-uniform, and amount of deformation from a power feed location to a distant location will tend to become small.

Conversely, with the device of the seventh embodiment, since power is supplied to the electrodes from a plurality of locations, it is possible to make amount of deformation of the main body 10 as a result of voltage application uniform. If this is done, in a case where a light beam passes through the vicinity of the center of the main body 10 (refer to Fig. 12), for example, it is possible to increase amount of deformation of the main body 10 at that portion.

Other structures and advantages of this embodiment are basically the same as those of the previous described first embodiment, and so more detailed description has been omitted.

(Eighth Embodiment)

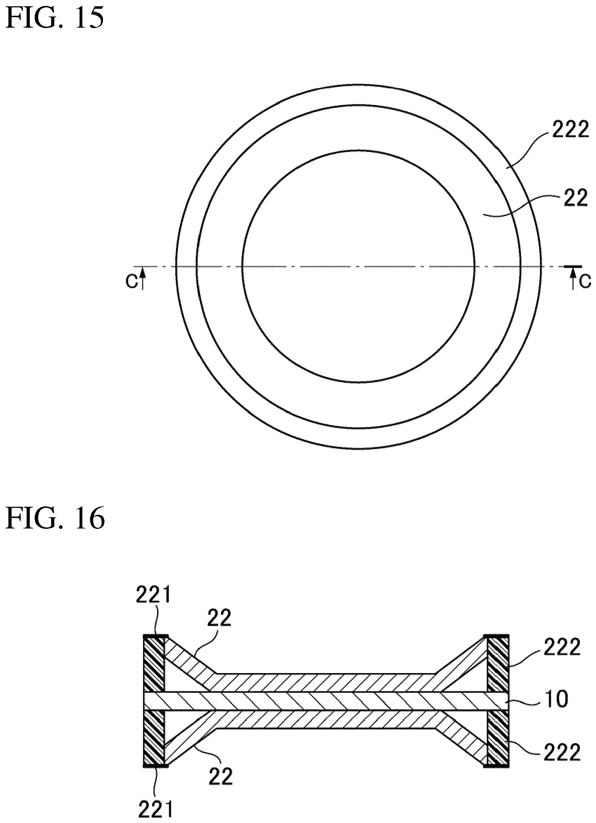

Next, a light beam position control device of an eighth embodiment of the present invention will be described on the basis of Fig. 15 and Fig. 16. In the description of this eighth embodiment, structural elements that are basically common to the device of the first embodiment described above will be assigned the same reference numerals, and redundant description be avoided.

With the device of this embodiment, peripheral sections of the electrodes 22 are separated from the main body 10, becoming directed gradually further away from the main body 10 at the outer end of the electrodes 22, and power is fed to the outer peripheral section of the electrodes 22 by conductive tape 221 (refer to Fig. 16). Here, the conductive tape 221 is arranged so as to surround the whole of the peripheral section of the electrodes 22, and in this way it is possible to carry out power feed from the entire peripheral section of the electrodes 22.

With the seventh embodiment described previously, power feed was from four directions, but with the device of the eighth embodiment power is fed from continuous positions on the whole of the periphery of the electrodes 22, which means there is the advantage that it is possible to make amount of deformation of the main body 10 due to voltage application uniform.

Other structures and advantages of this embodiment are basically the same as those of the previous described first embodiment and seventh embodiment, and so more detailed description has been omitted.

(Practical Example)

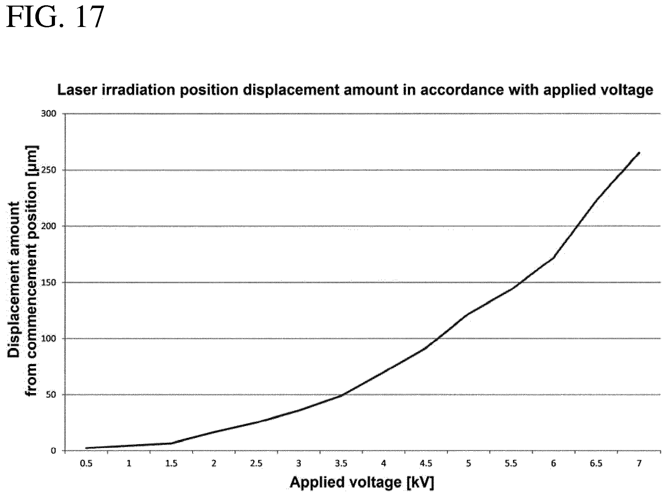

Amount of change in light beam position (displacement amount from an initial position) $|\delta_0 - \delta_1|$ using the device of the seventh embodiment was measured. However, with this practical example power was fed from two conductive tapes 221 at opposing positions. Specifically, the number of power feed locations with this practical example was two (for example, the 12 o'clock and 6 o'clock positions in Fig. 12). Results are shown in Fig. 17. Here, the vertical axis is displacement amount in light beam position ($\mu$m). It will be understood that the light beam position changes in accordance with applied voltage. It should be noted here that a relationship between applied voltage and displacement amount is nonlinear (with this example it is a substantially second order curve) but by obtaining a relationship between the two in advance, and storing this relationship, high precision light beam position control is possible.

It should be noted that the content of the present invention is not limited to the described embodiments. Various modifications are possible to the specific structure of the present invention, within the scope described in the patent claims.

For example, in each of the embodiments described above, description has assumed that light beam position from an optical element is described, but it is also possible to control position of line of sight to a camera (this is also one kind of light beam) .

Also, as the light beam, it is possible to have a laser beam, for example, and in this case a form of use such as controlling position of a UV laser beam used in a 3D printer, for example, using the present invention, is also possible

Further, as the electrodes of the power feed section it is also possible to use electrodes formed by vacuum deposition of granulated fine metal on the surface of the main body. Description Of The Reference Numerals

10 main body
20 power feed section
21 power supply
22 electrodes
221 conductive tape
222 frame
23 switch

30 light beam coarse adjustment section
100 light source
210 second main body
220 second power feed section

## Claims

1.  A light beam position control device comprising: a main body and a power feed section, wherein:

    the main body is constituted by a dielectric elastomer;
    the dielectric elastomer is made substantially transparent to a light beam that is an object of control;
    the dielectric elastomer is made to have a refractive index that is different to refractive index of a medium that exists around the main body, and that the light beam will pass through; and
    the power feed section is configured to cause thickness of the main body to change by applying a voltage to the main body.

2.  The light beam position control device of claim 1, wherein:

    the power feed section comprises a power supply and an electrode;
    the electrode is attached to a surface of the main body; and
    the power supply is configured to apply a voltage to the main body by means of the electrode.

3.  The light beam position control device of claim 2, wherein the electrode is arranged around positions where the light beam passes through, and in this way the light beam is capable of passing through the main body without passing through the electrode.

4.  The light beam position control device of claim 2 or claim 3, wherein the power supply is configured to apply a voltage to the main body, at a plurality of positions on the electrode.

5.  The light beam position control device of any one of claims 1 to 4, further comprising a light beam coarse adjustment section, and wherein:
    the light beam coarse adjustment section is configured to change position or direction of the light beam before the light beam is incident on the main body or after the light beam has passed through the main body.

6.  The light beam position control device of any one of claims 1 to 5, wherein the power feed section further comprises a storage section, wherein:

    the storage section stores correspondence information between a voltage value applied to the main body and amount of deformation of the main body; and
    the power feed section is configured to perform power feed from the power supply to the main body by specifying the voltage corresponding to intended amount of deformation, based on the correspondence information.

7.  The light beam position control device of any one of claims 1 to 6, further comprising a second main body and a second power feed section, wherein:

    the second main body is constituted by a dielectric elastomer;
    the dielectric elastomer of the second main body is made substantially transparent to a light beam that has passed through the first main body;
    the dielectric elastomer of the second main body is made to have a refractive index that is different to refractive index of a medium that exists around the second main body, and that the light beam will pass through; and
    the second power feed section is configured to cause thickness of the second main body to change by applying a voltage to the second main body.

8.  A light beam position control method that uses a light beam position control device comprising a main body and a power feed section, wherein:

    the main body is constituted by an dielectric elastomer;

the dielectric elastomer is made substantially transparent to a light beam that is an object of control;
the dielectric elastomer is made to have a refractive index that is different to refractive index of a medium that exists around the main body, and that the light beam will pass through; and
the power feed section is configured to cause thickness of the main body to change by applying a voltage to the main body, the light beam position control method comprising:

a step of applying voltage from the power feed section to the main body; and
a step of causing the light beam to pass through the main body, that has been deformed by application of the voltage, so as to change emission position of the light beam from the main body, before and after the deformation.

FIG. 1

FIG. 2

## FIG. 3

## FIG. 4

## FIG. 5

## FIG. 6

## FIG. 7

## FIG. 8

## FIG. 9

FIG. 10

410   310   210   10

420   320   220   20

FIG. 11

410   310   210   10

FIG. 12

FIG. 13

FIG. 14

FIG. 15

FIG. 16

FIG. 17

Laser irradiation position displacement amount in accordance with applied voltage

## INTERNATIONAL SEARCH REPORT

| International application No. |
| --- |
| PCT/JP2016/076149 |

**A. CLASSIFICATION OF SUBJECT MATTER**
*G02B26/08*(2006.01)i, *G02B26/10*(2006.01)i

According to International Patent Classification (IPC) or to both national classification and IPC

**B. FIELDS SEARCHED**

Minimum documentation searched (classification system followed by classification symbols)
G02B26/08, G02B26/10

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 10-133135 A (Toshiba Corp.), 22 May 1998 (22.05.1998), paragraphs [0019] to [0025], [0040] to [0043], [0054]; fig. 1, 6 (Family: none) | 1-8 |
| Y | JP 2003-302578 A (Olympus Optical Co., Ltd.), 24 October 2003 (24.10.2003), paragraphs [0093] to [0094], [0117] to [0119]; fig. 34 to 35 & US 2003/0189766 A1 paragraphs [0324] to [0325], [0353] to [0355]; fig. 34 to 35 & CN 1437039 A | 1-8 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 November 2016 (08.11.16) | 22 November 2016 (22.11.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

## INTERNATIONAL SEARCH REPORT

International application No.

PCT/JP2016/076149

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-526254 A  (ETH Zuerich, ETH Transfer), 16 July 2009 (16.07.2009), paragraphs [0060] to [0062]; fig. 8 to 11 & US 2009/0310209 A1 paragraphs [0098] to [0100]; fig. 8 to 11 & WO 2007/090843 A2     & EP 1826591 A1 & CN 101379418 A | 3 |
| Y | JP 2010-504554 A  (Sinvent A/S), 12 February 2010 (12.02.2010), fig. 6a, 6b & US 2011/0149409 A1 fig. 6a, 6b & WO 2008/035983 A1     & CN 101517452 A | 4 |
| A | WO 2013/007744 A1  (TRIDONIC DRESDEN GMBH & CO. KG), 17 January 2013 (17.01.2013), description, page 7, line 29 to page 8, line 8; page 9, line 19 to page 10, line 2; fig. 3a, 3b & EP 2732482 A1         & DE 102011079012 A & CN 103718322 A | 1-8 |
| A | WO 2005/085930 A1  (SIEMENS AG), 15 September 2005 (15.09.2005), entire text; all drawings & DE 102004011026 A | 1-8 |
| A | JP 2010-204280 A  (Canon Inc.), 16 September 2010 (16.09.2010), paragraphs [0023] to [0024]; fig. 2 (Family: none) | 7 |
| A | JP 2014-194562 A  (Seiko Epson Corp.), 09 October 2014 (09.10.2014), paragraphs [0016], [0018], [0067]; fig. 3 (Family: none) | 4 |

Form PCT/ISA/210 (continuation of second sheet) (January 2015)

**REFERENCES CITED IN THE DESCRIPTION**

**Patent documents cited in the description**

- JP 2010224003 A

- JP 2006050856 A

**Non-patent literature cited in the description**

- **M. BOZLAR et al.** Dielectric elastomer actuators with elastomeric electrodes. *Applied Physics Letters,* 2012, vol. 101.9